(19) Europäisches Patentamt
European Patent Office
Office européen des brevets

(11) Publication number: **0 309 476 B1**

# (12) EUROPEAN PATENT SPECIFICATION

(45) Date of publication of patent specification: 18.12.91 Bulletin 91/51

(51) Int. Cl.$^5$: C09D 11/10

(21) Application number: 87904155.6

(22) Date of filing: 22.05.87

(86) International application number: PCT/US87/01186

(87) International publication number: WO 87/07629 17.12.87 Gazette 87/28

## (54) INK COMPOSITIONS AND PREPARATION.

(30) Priority: 02.06.86 US 872293
18.05.87 US 50434

(43) Date of publication of application: 05.04.89 Bulletin 89/14

(45) Publication of the grant of the patent: 18.12.91 Bulletin 91/51

(84) Designated Contracting States: BE DE FR GB IT NL SE

(56) References cited:
FR-A- 2 311 820
US-A- 4 233 196
CHEMICAL ABSTRACTS, vol. 96, no. 26, 28 June 1982, Columbus, Ohio, US, page 101, abstract 219462t & JP-A-8210663
RESEARCH DISCLOSURE, June 1984, Emsworth, GB: "Water-resistant coatings form waterdispersed polymers", page 259, disclosure no. 24222

(73) Proprietor: EASTMAN KODAK COMPANY (a New Jersey corporation)
343 State Street
Rochester New York 14650 (US)

(72) Inventor: CONEY, Charles, Herbert
2008 Canterbury Road
Kingsport, TN 37660 (US)
Inventor: GOSSETT, John, Robert, Jr.
5932 Odd Blairs Gap Route 4
Kingsport, TN 37660 (US)
Inventor: PARSONS, Theron, Edward, III
1245 Watauga Street
Kingsport, TN 37660 (US)

(74) Representative: Parent, Yves
Kodak-Pathé Département Brevets et Licences Centre de Recherches et de Technologie Zone Industrielle
F-71102 Chalon-sur-Saône Cédex (FR)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This application is a continuation-in-part of Application Serial No. 872,293 filed June 2, 1986.

This invention concerns pigmented, aqueous-alcohol inks having greatly improved printing properties such as flow-out, print smoothness and gloss, and the like, and also concerns concentrates for the preparation of these inks, and wherein the pigment carrier or binder comprises water dispersible polyester material. The term dispersible as used herein encompasses the phenomena of solubilization, dissipation, suspension and the like of the polyester in the aqueous system. No permanent property modifiers are necessary in the ink system for achieving markedly superior printed coatings by way of the present greatly simplified ink preparation and printing methods, however, such property modifiers as well as conventional dispersing aids, biocides, defoamers and the like may be used if desired. The present inks find special utility for letter press, intaglio, gravure, flexographic and other printing processes adaptable to the use of aqueous inks.

The printing industry in general finds many applications for the use of water-based inks and overprint varnishes as a means of meeting increasingly stringent solvent effluent regulations. Present-day water-based inks often fail to satisfy these regulations as well as the necessary printability, stability, and performance properties required for commercial inks. For example, the various ethylene-acrylic acid copolymer salts of U.S. Patent 3,607,813, the disclosure of which is incorporated herein by reference (for the printing process descriptions therein), in addition to requiring complex polymer and ink preparations, lack in performance on certain substrates. Other such aqueous or semi-aqueous systems proposed for printing inks contain polymers such as styrene-butadiene or polyacrylate latex systems but these systems also have serious drawbacks including being nonwater-dispersible after short drying periods which complicates equipment clean up. Other water soluble or dispersible polymers suggested for printing ink use are discussed in U.S. Patent 4,072,644.

The present invention provides vast improvements in the preparation, stability, and performance of water-based inks for printing and coating, particularly in regard to flow-out. The invention in its broad embodiment is defined as a composition useful as or for the manufacture of printing inks comprising.

(A) from 5 to 60 weight %, based on the total weight of the composition, preferably from 10 to 40 weight %, and most preferably from 15 to 30 weight %, of polymeric material of at least one linear water-dispersible polymer having carbonyloxy linking groups in the linear molecular structure wherein up to 80% of the linking groups may be carboxylamido linking groups, the polymer having an inherent viscosity of from 0.1 to 1.0, preferably from 0.1 to 0.5 measured in a 60/40 parts by weight solution of phenol/tetrachloroethane at 25°C and at a concentration of 0.25 gram of polymer in 100 ml of the solvent, the polymer containing substantially equimolar proportions of acid equivalents (100 mole percent) to hydroxy and amino equivalents (100 mole percent), the polymer comprising the reaction products of (a), (b), (c) and (d) from the folllowing reactants or ester forming or ester-amide forming derivatives thereof;

(a) at least one disfunctional dicarboxylic acid;

(b) from 4 to 25 mole percent, based on a total of all acid, hydroxyl and amino equivalents being equal to 200 mole percent, of at least one difunctional sulfomonomer containing at least one metal cationic group attached to an aromatic or cycloaliphatic nucleus wherein the functional groups are hydroxy, carboxyl or amino;

(c) at least one difunctional reactant selected from a glycol or a mixture of a glycol and diamine having two —NRH groups, the glycol containing two —$CH_2$—OH groups of which at least 15 mole

(1) at least 15 mole percent, based on the total mole percent of hydroxy or hydroxy and amino equivalents, is a poly(ethylene glycol) having the structural formula

$$H(OCH_2-CH_2)_nOH,$$

n being an integer of from 2 to 20, or

(2) of which from 0.1 to less than 15 mole percent, based on the total mole percent of hydroxy or hydroxy and amino equivalents, is a poly(ethylene glycol) having the structural formula

$$H(OCH_2-CH_2)_nOH,$$

n being an integer of between 2 and 500, and whith the proviso that the mole percent of said poly(ethylene glycol) whithin said range is inversely proportional to the quantity of n within said range; and

(d) from none to at least one disfunctional reactant slected from a hydroxycarboxylic acid having one —$C(R)_2$—OH group, an amino-carboxylic acid having one —NRH group, and an amino-alcohol having one —$C(R)_2$—OH group and one —NRH group, or mixtures of said difunctional reactants;

wherein each R in the (c) or (d) reactants is a H atom or an alkyl group of 1 to 4 carbon atoms;

(B) from 0.1 to 60 weight %, based on the total weight of the composition, preferably from 5 to 40 weight %, and most preferably from 10 to 30 weight %, of pigment material dispersed in said polymeric material; and

(C) from 10 to 90 weight %, based on the total weight of the composition, preferably from 20 to 80 weight %, and most preferably from 30 to 70 weight % of water admixed with alcohol selected from methanol, ethanol, n-propanol, isopropanol, or mixtures thereof, preferably n-propanol by itself, in a weight ratio of water to alcohol of from 99/1 to 1/1, preferably from 85/10 to 95/10, and most preferably 90/10.

In the above polyester material it is preferred that very minor, e.g., less than 10 mol % based on all reactants, of reactant (d) is employed, that at least 70 mol % of reactant (c) is glycol, and that at least 70 mol % of all the hydroxy equivalents is present in the glycol.

In preferred embodiments of the invention:

the polymeric material comprises (a) an acid component (moiety) of from 75 to 84 mole % isophthalic acid and conversely from 25 to 16 mole % 5-sodiosulfoisophtalic acid, and (b) a glycol component (moiety) of from 45 to 60 mole % diethylene glycol and conversely from 55 to 40 mole % 1,4-cyclohexanedimethanol or ethylene glycol;

the pigment material is dispersed in said polymeric material in a weight ratio of pigment material to total polymeric material, of from 1/8 to 4/1, and most preferably from 1/3 to 2/1;

the inherent viscosity of the polymeric material is from 0.28 to 0.35, the said acid component (moiety) comprises from 80 to 83 mole % isophthalic acid and conversely from 20 to 17 mole % 5-sodiosulfoisophthalic acid, and the said glycol component (moiety) comprises from 52 to 56 mole % diethylene glycol and conversely from 48 to 44 mole % 1,4-cyclohexanedimethanol;

the pigment is one or a mixture of the following color index materials according to their generic names: C.I. Pigment Yellow 17; C.I. Pigment Blue 27; C.I. Pigment Red 49:2; C.I. Pigment Red 81:1; C.I. Pigment Red 81:3; C.I. Pigment Red 81:x; C.I. Pigment Yellow 83; C.I. Pigment Red 57:1; C.I. Pigment Red 49:1; C.I. Pigment Violet 23; C.I. Pigment Green 7; C.I. Pigment Blue 61; C.I. Pigment Red 48:1; C.I. Pigment Red 52:1; C.I. Pigment Violet 1; C.I. Pigment White 6; C.I. Pigment Blue 15; C.I. Pigment Yellow 12; C.I. Pigment Blue 56; C.I. Pigment Orange 5; C.I. Pigment Black 7; C.I. Pigment Yellow 14; C.I. Pigment Red 48:2; and C.I. Pigment Blue 15:3;

the alcohol is n-propanol;

the aqueous-alcohol ink is coated or printed onto a substrate selected from metal foil, newsprint, bleached and unbleached Kraft paper, clay coated paper, glass, calendered paper, stainless paper, paper board, and films or other substrates of polyester, polycarbonate, cellulose ester, regenerated cellulose, poly(vinylidene chloride), polyamide, polyolefin, or polystyrene; and

said coating or print comprises any of the above ink compositions wherein a substantial portion of the initial metal cations of the water solubilizing sulfonate groups of the polymeric material has been replaced with an insolubilizing polyvalent metal cation, such as $Al^{+3}$, $Ca^{++}$, or the like as disclosed and in the manner described in U.S. Patent 4,145,469, the disclosure of which is incorporated herein by reference. As stated therein, generally, based on the weight of the polymeric material, 0.05% to 2.0% by weight of the polyvalent metal cation are required for effective insolubilization.

The term "moiety" as used herein designates the residual portion of the reactant acid or glycol which actually enters into or onto the polymer chain during the condensation or polycondensation reaction.

The complete chemical definitions of the above C.I. pigments are given in the following table:

## Pigments

| Generic Name | C.A. Index/Chemical Name |
|---|---|
| C.I. Pigment Yellow 17 | Butanamide, 2,2'-[(3,3'-dichloro[1,1'-biphenyl]4,4'-diyl)bis(azo)bis[N(2-methoxyphenyl)-3-oxo- |
| C.I. Pigment Blue 27 | Ferrate (4-1), hexakis (cyano-C)-ammonium iron (3+)(1:1:1) |
| C.I. Pigment Red 49:2 | 1-Naphthalenesulfonic acid, 2-[(2-hydroxy-1-naphthalenyl)azo]-, calcium salt (2:1) |
| C.I. Pigment Red 81:1 | Benzoic acid, 2,-[6-ethyl-amino)-3-(ethylimino)-2,7-dimethyl-3H-xanthen-9-yl]-, ethyl ester, w/molybdenum tungsten hydroxide oxide phosphate |
| C.I. Pigment Red 81:3 | Benzoic acid, 2-[6-ethyl-amino)-3-ethylimino)-2,7-dimethyl-3H-xanthen-9-yl]-, ethyl ester, molybdate-silicate |

| Generic Name | C.A. Index/Chemical Name |
|---|---|
| C.I. Pigment Red 81:x | Benzoic acid, 2-[6-(ethylamino)-3-(ethylimino)-2,7-dimethyl-3H-xanthen-9-yl]-ethyl ester, molybdate-phosphate |
| C.I. Pigment Yellow 83 | Butanamide, 2,2'-[(3,3'-dichloro[1,1'-biphenyl]-4,4'-diyl)bis(azo)bis[N-(4-chloro-2,5-dimethoxyphenyl)-3-oxo- |
| C.I. Pigment Red 57:1 | 2-Naphthalenecarboxylic acid, 3-hydroxy-4-[(4-methyl-2-sulfophenyl)azo]-, calcium salt (1:1) |
| C.I. Pigment Red 49:1 | 1-Naphthalenesulfonic acid, 2-[(2-hydroxy-1-naphthalenyl)azo]-, barium salt (2:1) |
| C.I. Pigment Violet 23 | Diindolo[3,3',2'm] triphenodioxazine, 8,18-dichloro-5,15-diethyl-5,15-dihydro- |
| C.I. Pigment Green 7 | C.I. Pigment Green 7 |
| C.I. Pigment Blue 61 | Benzenesulfonic acid, [[4-[[4-phenylamino)phenyl]-[4-(phenylimino)-2,5-cyclohexadien-1-ylidene]methyl]-phenyl]amino]- |
| C.I. Pigment Red 48:1 | 2-Naphthalenecarboxylic acid, 4-[(5-chloro-4-methyl-2-sulfophenyl)azo]-3-hydroxy-, barium salt (1:1) |
| C.I. Pigment Red 52:1 | 2-Naphthalenecarboxylic acid, 4-[(4-chloro-5-methyl-2-sulfophenyl)azo]-3-hydroxy-, calcium salt (1:1) |
| C.I. Pigment Violet 1 | Ethanaminium, N-[9-(2-carboxyphenyl)-6-(diethylamino)-3H-xanthen-3-ylidene]-N-ethyl-, molybdatetungstatephosphate |

| Generic Name | C.A. Index/Chemical Name |
| --- | --- |
| C.I. Pigment White 6 | Titanium oxide ($TiO_2$) |
| C.I. Pigment Blue 15 | Copper, [29H, 31H-phthalocyaninato (2-)-$N^{29}$, $N^{30}$, $N^{31}$, $N^{32}$]-, (Sp-4-1)- |
| C.I. Pigment Yellow 12 | Butanamide, 2,2'-[(3,3'-dichloro[1,1'-biphenyl]-4,4'-diyl)bis(azo)]bis[3-oxo-N-phenyl- |
| C.I. Pigment Blue 56 | Benzenesulfonic acid, 2-methyl-4-[[4-[[4-[(3-methylphenyl)amino]phenyl]-[4-[(3-methylphenyl)-imino]-2,5-cyclohexa-dien-1-ylidene]methyl]-phenyl]amino]- |
| C.I. Pigment Orange 5 | 2-Naphthalenol, 1-[(2,4-dinitrophenyl)azo]- |
| C.I. Pigment Black 7 | Carbon black |
| C.I. Pigment Yellow 14 | Butanamide, 2,2'-[(3,3'-dichloro[1,1'-biphenyl]4,4'-diyl)bis(azo)]bis-[N-(2-methylphenyl)-3-oxo- |
| C.I. Pigment Red 48:2 | 2-Naphthalenecarboxylic acid, 4-[(5-chloro-4-methyl-2-sulfophenyl)-azo]-3-hydroxy-, calcium salt (1:1) |
| C.I. Pigment Blue 15:3 | Copper, [29H, 31H-phthalocyaninato (2-)-$N^{29}$, $N^{30}$, $N^{31}$, $N^{32}$]-, (SP-4-1)- |

The inherent viscosities (I.V.) of the particular polyester materials useful herein range from 0.1 to 1.0 determined according to ASTM D2857-70 procedure, in a Wagner Viscometer of Lab Glass, Inc. of Vineland, New Jersey, having a 1/2 ml. capillary bulb, using a polymer concentration 0.25% by weight in 60/40 by weight of phenol/tetrachloroethane. The procedure is carried out by heating the polymer/solvent system at 120°C for 15 minutes, cooling the solution to 25°C and measuring the time of flow at 25°C. The I.V. is calculated from the equation

$$(\eta)\,{}^{25^\circ C.}_{0.50\%} = \frac{\ln \frac{t_s}{t_o}}{C}$$

where:

$(n)$ = inherent viscosity at 25°C at a polymer concentration of 0.25 g/100 ml. of solvent;

ln = natural logarithm;

$t_s$ = sample flow time;

$t_o$ = solvent-blank flow time; and

C = concentration of polymer in grams per 100 ml. of solvent = 0.25.

The units of the inherent viscosity throughout this application are in deciliters/gram. It is noted that higher concentrations of polymer, e.g., 0.50 g of polymer/100 ml solvent may be employed for more precise I.V. determinations.

In general, the present polyester materials are excellent film formers for water-based printing inks. The polymers form stable dispersions in water and produce tough, flexible films on drying. No permanent modifiers are required, and films will form at temperatures just above the freezing point of water. The polymers in dispersion form may be plasticized if necessary, for example, with certain water immiscible phthalate esters to high degrees of flexibility. Printing inks prepared from the aqueous-alcohol dispersed polymers are water reducible and require no wetting agents although such may be employed. The inks dry rapidly upon printing, wet surfaces exceptionally well and have excellent adhesion to many plastic films and metal foil as well as to paper, glass and many other substrates. Both the 100% solid polymers and the corresponding aqueous-alcohol dispersions thereof may be pigmented by conventional techniques, and the alcohol may be added prior to or during blending of the polymer aqueous dispersion and pigment or to the pre-formed aqueous polymer-pigment dispersion by suitable mixing. It is preferred to add alcohol to the aqueous polymer dispersion prior to pigment addition and grinding, as marked improvement in color development, smoothness, and gloss in the print are thereby effected. The prints have moderate water resistance upon heating and may be post-treated to produce films with excellent resistance to water, for example, with an aqueous alum solution or the like cation.

The aforedescribed polyester material is prepared according to the polyester preparation technology described in U.S. Patents 3,732,872 and 3,779,993, the disclosures of which ate incorporated herein by reference, and the use of the term "acid" in the above description and in the appended claims includes the various ester forming or condensable derivatives of the acid reactants such as the dimethyl esters thereof as employed in the preparations set out in these patents.

Dispersal of the present polyester material in water is preferably done at preheated water temperature of a 180° to 200°F and the polymer added rapidly as pellets to the vortex under high shear stirring. A Cowles Dissolver, Waring Blender, or similar equipment may be used. Once water is heated to temperature, additional heat input is not required. Depending upon the volume prepared, dispersal of the pellets by stirring should be complete within 15 to 30 minutes. Continued agitation with cooling may be desirable to prevent thickening at the surface due to water evaporation. Viscosities of the dispersions remain low up to nonvolatile levels of 25-30%, but generally increase sharply above these levels. Viscosities of the dispersions will be influenced by the degree of polymer dispersion (fineness) obtained which is affected by the dispersing temperature, shear, and time. A nonvolatile content for most applications is 38% for the present preferred polyester material.

The present concentrates and inks may also be prepared by two-roll milling the finely comminuted, nonpolymer soluble pigment into the solid polyester material and thereafter dispersing the pigmented material in water in a manner generally similar to the procedure described in U.S. Patent 4,148,779 for solubilizing organic disperse textile dyes in polyester for subsequent dispersal in water. Dispersions can also be made by adding the pigment at high speed agitation to the polyester material previously dispersed in water and then grinding in a ball mill or sand mill to further reduce pigment size. The preferred pH of the present inks is from 5.0 to 7.5.

The pigments useful in the present invention, in addition to those specifically identified above, include those

described in NPIRI Raw Materials Data, Vol. 4, Pigments, Copyright 1983.

The following examples will further illustrate practice of the invention.

Polyester Preparation

Example 1

A mixture of 79.5 g (0.41 mole) of dimethyl isophthalate, 26.6 g (0.09 mole) of dimethyl-5-sodiosulfoisophthalate, 54.1 g (0.51 mole) of diethylene glycol, 37.4 g (0.26 mole) of 1,4-cyclohexanedimethanol, 1.4 ml of a 1.0% (based on Ti) catalyst solution of titanium tetraisopropoxide, and 0.74 g (0.009 mole) of sodium acetate buffer is stirred and heated for two hours at 200-220°C. The temperature is then raised to 275°C and a vacuum of 0.3 mm is applied. Heating and stirring is continued for 1 hour under these conditions. After cooling, the polymer obtained has an I.V. of 0.36 and is tough and rubbery and is dissipatable in hot water to the extent of about 25 weight percent to give a clear, slightly viscous solution. The composition of the acid moieties of this polyester material is analyzed to be 82 mole % isophthalic acid residue and 18 mole % 5-sodiosulfoisophthalic acid residue, and of the glycol moieties is analyzed to be 54 mole % diethylene glycol and 46 mole % 1,4-cyclohexanedimethanol.

Example 1A

Polyesters designated (a), (b), (c) and (d) were prepared essentially in accordance with Example 1 of the aforementioned U.S. Patent 4,233,196 from the following materials:

| (a) | g. moles |
|---|---|
| Dimethyl Isophthalate (IPA) | 0.415 |
| Dimethyl-5-Sodiosulfoisophthalate (SIP) | 0.085 |
| 1,4-Cyclohexanedimethanol (CHDM) | 0.520 |
| Carbowax 1000 (CW 1000) | 0.0237 |
| Sodium Acetate | 0.0085 |
| Irganox 1010 | 0.0085 |

The Carbowax 1000 has the structure

$$H(OCH_2-CH_2)_nOH$$

wherein n is 22. The polymer analyzed by NMR contains (in reacted form) 83 mole % IPA, 17 mole % SIP, 94.5 mole % CHDM, and 5.5 mole % of CW 1000, and has an I.V. of 0.39.

| (b) | g. moles |
|---|---|
| Dimethyl Isophthalate | 0.328 |
| Dimethyl-5-Sodiosulfoisophthalate | 0.072 |
| 1,4-Cyclohexanedimethanol | 0.442 |
| Carbowax 400 (n=10) | 0.058 |
| Sodium Acetate | 0.0072 |

The polymer as analyzed by NMR contains (in reacted form) 82 mole % IPA, 18 mole % SIP, 85.5 mole % CHDM and 14.5 mole % CW 400, and has an I.V. of 0.46.

| (c) | g. moles |
|---|---|
| Dimethyl Isophthalate | 0.41 |
| Dimethyl-5-Sodiosulfoisophthalate | 0.09 |
| 1,4-Cyclohexanedimethanol | 0.55 |
| Carbowax 4000 (n=90) | 0.0005 |
| Sodium Acetate | 0.009 |

The polymer as analyzed by NMR contains (in reacted from) 82 mole % IPA, 18 mole % SIP, 99.9 mole % CHDM and 0.1 mole % CW 4000, and has an I.V. of 0.16.

| (d) | g. moles |
|---|---|
| Dimethyl Isophthalate | 0.205 |
| Dimethyl-5-Sodiosulfoisophthalate | 0.045 |
| Ethylene Glycol (EG) | 0.9638 |
| Carbowax 2000 (n=45) | 0.03625 |
| Sodium Acetate | 0.0045 |

The polymer as analyzed by NMR contains (in reacted from) 82 mole % IPA, 18 mole % SIP, 85.5 mole % EG and 12.5 mole % CW 2000, and has an I.V. of 0.34.

In such polymers containing the Carbowax material, the n value is preferably between 6 and 150.

In accordance with the present invention, inks prepared from the above polyester material and including the alcohol and polymer insoluble pigments have been found to be unexpectedly superior over prior aqueous inks in one or more of such properties as flow-out or printability, pigment wetting, pigment stability, temperature stability (heat and freeze-thaw), non-settling for extended periods of time, nonpolluting with respect to odor and volatile organics, nonflocculating, wide viscosity range inks, adhesion to a variety of substrates, hardness, gloss, drying rate on substrates, resistance to grease, water and scuff, compatibility with other water-based inks, wet rub resistance, ink mileage characteristics (considerable water dilution allowable at the press), ink press stability in general, printability (clean, sharp transfer without "stringing or misting"), trapping, easy clean up, nonplugging of printing plates, flexibility, redispersibility or rewetting, crinkle resistance, high pigment loading, solvent resistance, alkali, chemical and detergent resistance, blocking resistance, lightfastness, toughness, substrate wetting, hold-out, opacity, dry-rate, and no offset on the printing press (coating, e.g. on tension rollers).

Ink Preparation

Example 2

| Final Ink Composition | Approximate % by Weight |
|---|---|
| deionized water | 54.8 |
| polymer of Example 1 | 21.5 |
| carbon black, Pigment C.I. 7 | 13.5 |
| n-propanol | 10.0 |
| biocide, Tektamer 38 AD (1,2-dibromo-2,4-dicyanobutane) | 0.2 |

The solid polymer (32 parts) is dispersed in approximately 68 parts of deionized water at 85°C to 95°C and 0.2 parts of biocide added. To 75 parts of this dispersion is added 10 parts of deionized water and 15 parts of the carbon black at high speed agitation for five minutes on a Waring blender. The mixture is then milled in an

Eiger mill operated at 5,000 rpm for 7.5 minutes to further reduce the pigment for a grind of from "2" to "0" NPIRI grind gauge. The resulting composition has a pH of 5.6 and a viscosity of 26-29 seconds on a #2 Zahn cup determined according to ASTM D-4212-82. To 90 parts by weight of this composition is added 10 parts by weight of n-propanol with stirring.

This procedure yields an aqueous-alcohol ink which is nonsettling for extended periods, does not flocculate or agglomerate, and can be reduced in viscosity with deionized water. The ink dries rapidly upon printing, has virtually no odor and can be readily cleaned from printing equipment with warm deionized water. Tenacious, dried films of this ink can be cleaned from printing equipment with small amounts of detergents (5-10%) added to warm (80-90°F) deionized water. Such properties are also obtained using other pigments such as those of the following examples.

Example 3

The solid polymer (32 parts) of Example 1 is dispersed in approximately 68 parts of deionized water at 85°C to 95°C and 0.2 parts of biocide (Tektamer 38 AD) added. To 70 parts of this dispersion is added 30 parts of the titanium dioxide pigment, C.I. 6, at high speed agitation for five minutes on a Waring Blender. The mixture is then milled in an Eiger mill operated at 5,000 rpm for 7.5 minutes to further reduce the pigment for a grind of from "2" to "0" NPIRI grind gauge. The resulting composition has a pH of 6.6 and a viscosity of 26-29 seconds on a #2 Zahn cup determined according to ASTM D-4212-82. To 90 parts by weight of this composition is added 10 parts by weight of n-propanol. This ink was reduced to a press-ready viscosity of 22 seconds (#2 Zahn cup) with deionized water. Proofs of this ink were prepared with a flexographic hand proofer employing a 180 line anilox roll on aluminum foil, Mylar film, corona discharge treated polyethylene coated paperboard and corona discharge treated polyethylene film with excellent adhesion and printability results.

Example 4

The solid polymer (32 parts) of Example 1 is dispersed in approximately 68 parts of deionized water at 85°C to 95°C and 0.2 parts of biocide (Tektamer 38 AD) added. To 89 parts of this dispersion is added 11 parts of the blue pigment, C.I. 15:3 at high speed agitation for five minutes on a Waring Blender. The mixture is then milled in an Eiger mill operated at 5,000 rpm for 7.5 minutes to further reduce the pigment for a grind of from "2" to "0" NPIRI grind gauge. The resulting composition has a pH of 5.85 and a viscosity of 28-32 seconds on a #2 Zahn cup determined according to ASTM D-4212-82. To 90 parts of this composition is added 10 parts of n-propanol. This ink was printed on corona discharge treated polyethylene film as in Example 3 with excellent adhesion and printability results.

Example 5

The solid polymer (32 parts) of Example 1 is dispersed in approximately 68 parts of deionized water at 85°C to 95°C and 0.2 parts of biocide (Tektamer 38 AD) added to provide a resin dispersion. To 60 parts of this resin dispersion is added 10 parts of n-propyl alcohol with agitation in a Waring Blender to obtain a substantially homogeneous mixture. 30 Parts of C.I. Pigment Blue 15:3, is added to the mixture with high speed agitation and blended for approximately five minutes. The blend is then milled in an Eiger mill operated at 5,000 rpm for three minutes to further wet-out and reduce the pigment for a grind rating of less than 1.0 on the NPIRI (National Printing Ink Research Institute) grind scale. The resulting concentrate has a viscosity of 1536 cps on a Model LVF Brookfield Syncro-Lectric Viscometer. To 33.3 parts by weight of this concentrate is added 63.0 parts of a resin dispersion prepared as in this example above, and 3.7 parts of n-propyl alcohol to formulate an ink which has a viscosity of approximately 28 seconds on a #2 Zahn cup, determined according to ASTM D-4212-82. This ink can be reduced readily to a lower viscosity if desired with deionized water. Proofs of this ink were prepared with a flexographic handproofer employing a 180-line anilox toll and with a Geiger Gravure proof press using a 150-line engraved cylinder. This ink has good printability, gloss, color development, and adhesion when printed on aluminum foil, Mylar film and clay-coated paper.

The invention has been described in detail with particular reference to preferred emhodiments thereof, but it will be understood that variations and modifications can be effected within the spirit and scope of the invention.

## Claims

1. A composition useful as or for the manufacture of printing inks comprising :

(A) from 5 to 60 weight % of polymeric material of at least one linear, water-dissipatable polymer having carbonyloxy liking groups in the linear molecular structure wherein up to 80 % of the linking groups may be carbonylamido linking groups, the polymer having an inherent viscosity of from 0.1 to 1.0 measured in a 60/40 parts by weight solution of phenoltetrachloroethane at 25°C and at a concentration of 0.25 gram of polymer in 100 ml of the solvent, the polymer containing substantially equimolar proportions of acid equivalents (100 mole percent) to hydroxy and amino equivalents (100 mole percent), the polymer comprising the reaction products of (a), (b), (c) from the following reactants ;

(a) from 75 to 84 mole % isophthalic acid and conversely,

(b) from 25 to 16 mole % 5-sodiosulfoisophthalic acid and,

(c) the glycol moiety comprising from 45 to 60 mole % diethylene glycol and conversely from 55 to 40 mole % either 1,4-cyclohexane dimethanol or ethylene glycol or mixtures thereof ;

(B) from 0.1 to 60 weight % of pigment material dispersed in said polymeric material ; and

(C) from 10 to 90 weight % of water admixed with alcohol selected from methanol, ethanol, n-propanol, isopropanol or mixtures thereof, in a weight ratio of water to alcohol of from 99/1 to 1/1.

2. A composition of claim 1 wherein

(A) the polymeric material comprises an acid moiety from 80 to 83 mole % isophthalic acid and conversely from 20 to 17 mole % 5-sodiosulfoisophthalic acid, and said glycol moiety comprises from 52 to 56 mole % diethylene glycol and conversely from 48 to 44 mole % 1,4-cyclohexanedimethanol.

(B) the pigment material is present in a weight ratio with respect to total polyester materials of from 1/8 to 4/1 blended with said polyester material ; and

(C) the water/alcohol mixture comprises from 30 to 70 weight % of the composition.

3. A composition of claim 2 wherein the weight ratio of water to alcohol is from 85/10 to 95/10.

4. A composition of any one of claims 1-3 wherein the pigment is one or a mixture of the following color index materials : C.I. pigment Yellow 17 ; C.I. pigment Blue 27 ; C.I. pigment Red 49:2 ; C.I. pigment Red 81:1 ; C.I. Pigment Red 81:3 ; C.I. Pigment Red 81:x ; C.I. Pigment Yellow 83 ; C.I. Pigment Red 57:1 ; C.I. Pigment Red 49:1 ; C.I, Pigment Violet 23 ; C.I. Pigment Green 7 ; C.I. Pigment Blue 61 ; C,I. Pigment Red 48:1 ; C.I. Pigment Red 52:1 ; C.I. Pigment Violet 1 ; C.I. Pigment White 6 ; C.I. Pigment Blue 15 ; C.I. Pigment Yellow 12 ; C.I. Pigment Blue 56 ; C.I. Pigment Orange 5 ; C.I. Pigment Black 7 ; C.I. Pigment Yellow 14 ; C.I. Pigment Red 48:2 ; and C.I, Pigment Blue 15:3.

5. An aqueous-alcohol ink of the composition of any one of claims 1-3 wherein the polymeric material comprises from 10 to 40 % by weight thereof.

6. An aqueous-alcohol ink of the composition of claim 5 coated onto a substrate selected from metal foil, newsprint, bleached and unbleached Kraft paper, clay coated paper, glass, calendered paper, stainless paper, paper board, and films or other substrates of polyester, polycarbonate, cellulose ester, regenerated cellulose, poly(vinylidiene chloride), polyamide, polyolefin, or polystyrene.

7. An substantially water-insoluble coating or print on a substrate, said coating or print comprising a composition of claim 5 wherein said water and alcohol have evaporated and a substantial portion of the initial metal cations of the water solubilizing sulfonate groups of the polymeric material has been replaced with an insolubilizing cation.

8. The method for preparing the concentrate of the composition of claim 1 comprising the steps of :

(a) dispersing said polymeric material on deionized water ;

(b) adding said alcohol to the dispersion of (a) with agitation to obtain a substantially homogeneous mixture ;

(c) adding said pigment to the mixture of (b) with agitation to form a pre-dispersion blend ; and

(d) grinding the blend of (c) to reduce the pigment particle size to less than about 6.0 on the NPIRI scale.

9. The method for preparing an ink from the composition of any one of claims 1-3 comprising adding to the composition either or both of

(a) a dispersion of polymeric material in deionized water, and

(b) a water-alcohol mixture, to reduce the viscosity of said composition to between 15 and 35 seconds on a # 2 Zahn cup, the amounts of said dispersion (a) and/or water-alcohol mixture (b) added being such as to give good printability and flow-out on the particular substrate to be printed.

## Patentansprüche

1. Zusammensetzung, die als Druckfarbe oder zur Herstellung von Druckfarben geeignet ist, mit:

(A) 5 bis 60 Gew.-% polymerem Material aus mindestens einem linearen, in Wasser dispergierbaren Polymer mit Carbonyloxy-Bindegruppen in der linearen molekularen Struktur, wobei bis zu 80 % der Bindegruppen Carbonylamido-Bindegruppen sein können, das Polymer eine Inherent-Viskosität von 0,1 bis 1,0, gemessen in einer Lösung aus 60 Gew.-Teilen Phenol und 40 Gew.-Teilen Tetrachlorethan bei 25 °C und einer Konzentration von 0,25 g Polymer in 100 ml des Lösungsmittels aufweist, das Polymer praktisch äquimolare Verhältnisse von Säure-Äquivalenten (100 Mol-%) zu Hydroxy- und Amino-Äquivalenten (100 Mol-%) aufweist, und das Polymer die Reaktionsprodukte von (a), (b), (c) der folgenden Reaktionskomponenten aufweist;

(a) von 75 bis 84 Mol-% Isophthalsäure und

(b) von 25 bis 16 Mol-% 5-Natriumsulfoisophthalsäure und

(c) der Glykolanteil aufweist

von 45 bis 60 Mol-% Diethylenglykol und

55 bis 40 Mol-% entweder 1,4-Cyclohexandimethanol oder Ethylenglykol oder Mischungen hiervon;

(B) von 0,1 bis 60 Gew.-% Pigmentmaterial, das in dem polymeren Material dispergiert ist und

(C) von 10 bis 90 Gew.-% Wasser, vermischt mit Alkohol, ausgewählt aus Methanol, Ethanol, n-Propanol, Isopropanol oder Mischungen hiervon, in einem Gewichtsverhältnis von Wasser zu Alkohol von 99/1 bis 1/1.

2. Zusammensetzung nach Anspruch 1, in der

(A) das polymere Material einen Säureanteil aus 80 bis 83 Mol-% Isophthalsäure und von 20-17 Mol-% 5-Natriumsulfoisophthalsäue aufweist und der Glykolanteil zu 52 bis 56 Mol-% aus Diethylenglykol und zu 48 bis 44 Mol-% aus 1,4-Cyclohexandimethanol besteht,

(B) das Pigment-Material in einem Gew.-Verhältnis zu den gesamten Polyestermaterialien von 1/8 bis 4/1, vermischt mit dem Polyestermaterial vorliegt und

(C) die Wasser/Alkohol-Mischung 30 bis 70 Gew.-% der Zusammensetzung ausmacht.

3. Zusammensetzung nach Anspruch 2, in der das Gewichtsverhältnis von Wasser zu Alkohol bei 85/10 bis 95/10 liegt.

4. Zusammensetzung nach einem der Ansprüche 1 - 3, in der das Pigment ein Pigment oder eine Mischung von Pigmenten der folgenden Color-Index-Materialien ist: C.I. Pigment Yellow 17; C.I. Pigment Blue 27; C.I. Pigment Red 49:2; C.I. Pigment Red 81:1; C.I. Pigment Red 81:3; C.I: Pigment Red 81:x; C.I. Pigment Yellow 83; C.I. Pigment Red 57:1; C.I. Pigment Red 49:1; C.I. Pigment Violet 23; C.I. Pigment Green 7; C.I. Pigment Blue 61; C.I. Pigment Red 48:1; C.I. Pigment Red 52:1; C.I. Pigment Violet 1; C.I. Pigment White 6; C. I. Pigment Blue 15; C.I. Pigment Yellow 12; C.I. Pigment Blue 56; C.I. Pigment Orange 5; C.I. Pigment Black 7; C.I. Pigment Yellow 14; C.I. Pigment Red 48:2; und C.I. Pigment Blue 15:3.

5. Wäßrig-alkoholische Druckfarbe der Zusammensetzung nach einem der Ansprüche 1-3, in der das polymere Material 10 bis 40 Gew.-% ausmacht.

6. Wäßrig-alkoholische Druckfarbe nach Anspruch 5, aufgetragen auf ein Substrat, ausgewählt aus einer Metallfolie, Zeitungsdruckpapier, gebleichtem oder ungebleichtem Kraftpapier, mit Ton beschichtetem Papier, Glas, kalandriertem Papier, farblosem Papier, Karton, Folien oder anderen Substraten aus Polyester, Polycarbonat, Celluloseester, regenerierter Cellulose, Poly(vinylidenchlorid), Polyamid, Polyolefin oder Polystyrol.

7. Praktisch wasserunlösliche Beschichtung oder praktisch wasserunlöslicher Druck auf einem Substrat, wobei die Beschichtung oder der Druck aus einer Zusammensetzung gemäß Anspruch 5 erzeugt worden ist, aus der Wasser und Alkohol verdampft worden sind und ein beträchtlicher Anteil der ursprünglichen Metallkationen der wasserlöslich machenden Sulfonatgruppen des polymeren Materials durch ein unlöslich machendes Kation ersetzt worden ist.

8. Verfahren zur Herstellung des Konzentrates der Zusammensetzung von Anspruch 1, mit den Stufen:

(a) Dispergieren des polymeren Materials in deionisiertem Wasser;

(b) Zugabe des Alkohols zur Dispersion von (a) unter Rühren zwecks Erzeugung einer praktisch homogenen Mischung;

(c) Zusatz des Pigmentes zur Mischung von (b) unter Rühren zwecks Erzeugung einer Vordispersionsmischung und

(d) Vermahlen der Mischung von (c) unter Verminderung der Pigmentteilchengröße auf weniger als etwa 6,0 auf der NPIRI-Skala.

9. Verfahren zur Herstellung einer Druckfarbe von der Zusammensetzung nach einem der Ansprüche 1 bis 3, bei dem man der Zusammensetzung zusetzt entweder oder sowohl als auch:

(a) eine Dispersion von polymerem Material in deionisiertem Wasser und

(b) eine Wasser-Alkohol-Mischung,

um die Viskosität der Mischung auf zwischen 15 und 35 Sekunden auf einem Zahnbecher Nr. 2 zu vermindern, wobei die Mengen an Dispersion (a) und/oder der Wasser-Alkohol-Mischung (b), die zugesetzt werden, so bemessen werden, daß eine gute Druckfähigkeit und Oberflächengüte auf dem speziellen zu bedruckenden Substrat erzielt werden.

## Revendications

1. Composition utile comme encre d'impression, ou pour la fabrication d'une encre d'impression, comprenant

(A) de 5 à 60 % en masse d'une substance polymère comprenant au moins un polymère linéaire dispersable dans l'eau ayant des groupes de liaison carbonyloxy dans la structure linéaire de la molécule, jusqu'à 80% de ces groupes de liaison pouvant être des groupes carbonylamido, le polymère ayant une viscosité inhérente de 0,1 à 1,0 mesuré dans un mélange 60/40 en masse de phénol/tétrachloroéthane à 25°C et une concentration de 0,25g de polymère dans 100 ml du solvant, le polymère contenant des proportions à peu près équimolaires d'équivalents acides (100% en moles) et d'équivalents hydroxy et amino (100% en moles), le polymère comprenant les produits de réaction (a), (b), (c) des réactifs suivants :

(a) de 75 a 84 % en mole d'acide isophtalique et en complément,

(b) de 25 à 16 % en mole d'acide 5-sodio sulfoisophtalique, et

(c) une partie glycol comprenant de 45 à 60 % en mole de diéthylèneglycol et en complément de 55 à 40 % en mole, soit de cyclohexanediméthanol, soit d'éthylèneglycol, soit du mélange de ces deux composés

(B) de 0,1 à 60 % en masse d'un pigment dispersé dans cette substance polymère et

(C) de 10 à 90 % en masse d'eau mélangée avec un alcool choisi parmi le méthanol, l'éthanol, le n-propanol, l'isopropanol, ou des mélanges de ces alcools, dans un rapport en masse eau/alcool de 99/1 à 1/1.

2. Composition de la revendication 1, dans laquelle

(A) la substance polymère comprend une partie acide avec de 80 à 83 % en mole d'acide isophtalique, et en complément de 20 à 17 % en mole d'acide 5-sodiosulfoisophtalique et une partie glycol avec de 52 à 56 % en mole de diéthylène glycol et en complément de 48 à 44 % en mole de cyclohexanediméthanol.

(B) le pigment est présent en mélange avec le polyester, à raison d'un rapport en masse du polyester total compris entre 1/8 et 4/1, et

(C) le mélange eau/alcool constitue de 30 à 70 % en masse de la composition.

3. Composition de la revendication 2, dans laquelle le rapport en masse de l'eau à l'alcool est compris entre 85/10 et 95/10.

4. Composition de l'une des revendications 1 à 3, dans laquelle le pigment est l'un ou un mélange des colorants suivants du Color Index : C.I. Pigment Yellow 17 ; C.I. Pigment Blue 27 ; C.I. Pigment Red 49:2 ; C.I. Pigment Red 81:1 ; C.I. Pigment Red 81:3 ; C.I. Pigment Red 81:x ; C.I. Pigment Yellow 83 ; C.I. Pigment Red 57:1 ;C.I. Pigment Red 49:1 ; C.I. Pigment Violet 23 ; C.I. Pigment Green 7 ; C.I. Pigment Blue 61 ; C.I. Pigment Red 48:1 ; C.I. Pigment Red 52.1 ; C.I. Pigment Violet 1 ; C.I. Pigment White 6 ; C.I. Pigment Blue 15 ; C.I. Pigment Yellow 12 ; C.I. Pigment Blue 56 ; C.I. Pigment Orange 5 ; C.I. Pigment Black 7 . C.I. Pigment Yellow 14 ; C.I. Pigment Red 48:2 ; and C.I. Pigment Blue 15:3.

5. Encre hydro alcoolique ayant la composition de l'une des revendications 1 à 3, dans laquelle la substance polymère représente de 10 à 40 % de la masse totale.

6. Encre hydro alcoolique de la revendication 5, appliquée sur un substrat choisi parmi, les feuilles métalliques, le papier journal, le papier kraft blanchi ou non, le papier au kaolin, le verre, le papier calandré, le papier incolore, le papier épais, (paper board), les films et autres substrats en polyester, en polycarbonate, en ester de cellulose, en cellulose régénérée, en polychlorure de vinylydène, en polyamide, en polyoléfine, ou en polystyrène.

7. Couche ou épreuve sur un substrat, pratiquement insoluble dans l'eau, comprenant la composition de la revendication 5, dans laquelle l'eau et l'alcool ont été évaporés, et une partie importante des cations métalliques initiaux des groupes sulfonate solubilisants dans l'eau, ont été remplacés par un cation insolubilisant.

8. Procédé pour préparer un concentré de la composition de la revendication 1, comprenant les étapes suivantes :

(a) on disperse la substance polymère sur l'eau déionisée ;

(b) on ajoute l'alcool à la dispersion obtenue en (a) en agitant pour obtenir un mélange pratiquement homogène ;

(c) on ajoute le pigment au mélange obtenu en (b), en agitant pour former un mélange pré-dispersé, et

(d) on broie le mélange obtenu en (c) pour réduire la taille des particules du pigment à moins de 6,0 environ dans l'échelle NPIRI,

9. Procédé pour préparer une encre de composition conforme à l'une des revendications 1 à 3, comprenant l'étape d'ajouter à la composition l'une ou les deux constituants suivants :

(a) une dispersion de substance polymère dans l'eau déionisé et

(b) un mélange eau-alcool, pour réduire la viscosité de cette composition à une valeur entre 15 et 35 secondes sur une coupelle Zahn n° 2, les quantités de cette dispersion (a) ou du mélange eau-alcool (10) ajoutées étant telles qu'elles fournissent une bonne aptitude à l'impression et une bonne mouillabilité du substrat particulier devant être imprimé